# EUROPÄISCHE PATENTSCHRIFT

(11) **EP 2 987 350 B1**
(45) Veröffentlichungstag und Bekanntmachung des Hinweises auf die Patenterteilung: **04.03.2020**
(21) Anmeldenummer: 14719621.6
(22) Anmeldetag: 14.04.2014
(51) Int. Cl.: H04W 12/08, H04W 12/00, G06F 21/57, H04W 88/02, H04L 29/06

(54) **MOBILSTATION UMFASSEND SICHERHEITSRESSOURCEN MIT UNTERSCHIEDLICHEN SICHERHEITSNIVEAUS**
MOBILE STATION COMPRISING SECURITY RESOURCES WITH DIFFERENT SECURITY LEVELS
STATION MOBILE POURVUE DE RESSOURCES DE SÉCURITÉ AYANT DIFFÉRENTS NIVEAUX DE SÉCURITÉ

(30) Priorität: 15.04.2013 DE 102013006470
(43) Veröffentlichungstag der Anmeldung: 24.02.2016
(73) Patentinhaber: Giesecke+Devrient Mobile Security GmbH, 81677 München (DE)
(72) Erfinder: DIETZE, Claus, 82395 Obersöchering (DE); GALKA, Gero, 83626 Valley (DE)
(86) Internationale Anmeldenummer: PCT/EP2014/000996
(87) Internationale Veröffentlichungsnummer: WO 2014/170006

(56) Entgegenhaltungen:
- US-A1- 2007 240 205
- US-A1- 2008 194 296
- US-A1- 2009 254 993
- US-A1- 2010 306 107
- US-A1- 2013 042 300

## Beschreibung

Die Erfindung betrifft eine Mobilstation umfassend ein mobiles Endgerät und umfassend Sicherheitsressourcen, sowie ein Applikationsladesystem und ein Risikoabschätzungssystem, jeweils mit einer Mobilstation.

Eine Mobilstation umfasst ein mobiles Endgerät, und in der Regel zudem ein Teilnehmeridentitätsmodul (auch Secure Element SE genannt), das im Endgerät betreibbar ist, und mit dem das Endgerät in einem Mobilfunknetz betreibbar ist. Das Teilnehmeridentitätsmodul oder Secure Element SE ist in vielen Mobilfunksystemen als entfernbare Teilnehmerkarte (Mikroprozessor-Chipkarte) gestaltet, z.B. als SIM-Karte, alternativ als fest implementiertes eUICC (embedded UICC; UICC = Universal Integrated Circuit Card).

Unter einem mobilen Endgerät wird ein Gerät zum Nutzen eines Mobilfunksystems verstanden, z.B. ein Mobiltelefon, Smart Phone oder PDA (Personal Digital Assistant) mit Mobiltelefonfunktion.

Unter der Bezeichnung Trustzone (Marke der Firma ARM) Architektur ist eine zweigeteilte Laufzeit-Architektur für ein Mikroprozessorsystem bekannt, die zwei Laufzeitumgebungen umfasst. Eine erste, "Normal Zone" oder "Normal World" genannte unsichere Laufzeitumgebung ist durch ein Normalbetriebssystem (z.B. Android, Windows Phone, iOS) gesteuert. Eine zweite, "Trustzone" oder "Trusted World" oder "Secure World" oder "Trusted Execution Environment TEE" genannte sichere oder vertrauenswürdige Laufzeitumgebung ist durch ein Sicherheitsbetriebssystem gesteuert.

Durch das Teilnehmeridentitätsmodul, die normale Laufzeitumgebung und die sichere Laufzeitumgebung sind Sicherheitsressourcen der Mobilstation gebildet, die unterschiedliche Sicherheitsniveaus (Sicherheitslevels) bieten. Die normale Laufzeitumgebung ist vergleichsweise unsicher, hat also ein geringes Sicherheitsniveau. Eine SIM-Karte hat ein vergleichsweise hohes Sicherheitsniveau, die sichere Laufzeitumgebung TEE ein mittleres.

Viele Nutzer von Applikation für Mobilstationen fordern, dass Applikationen, die sie in ihrer Mobilstation nutzen, ein gewisses Sicherheitsniveau einhalten. Andernfalls wären sie evtl. nicht bereit, die Applikation in ihrer Mobilstation zu nutzen. Anbieter von Applikationen für Mobilstationen sind daher daran interessiert, ein definiertes Sicherheitsniveau Ihrer Applikation garantieren zu können. Das Sicherheitsniveau einer Applikation hängt allerdings von den Sicherheitsressourcen der Mobilstation ab. Nur falls die Sicherheitsressourcen der Mobilstation einen gewissen Mindeststandard erfüllen, kann die Applikation eine ausreichende Sicherheit gewährleisten.

WO 2011/131365 A1 beschreibt ein System und ein Verfahren zum nachträglichen Konfigurieren einer bereits in einem mobilen Endgerät befindlichen Applikation. Dabei hat ein zentraler Server Informationen über mögliche Sicherheitsressourcen (Endgeräte-Konfigurationen mit unterschiedlichen Laufzeitumgebungen und / oder Sicherheitselementen) von mobilen Endgeräten und über Sicherheitsniveaus (Sicherheitsstufen), die den Sicherheitsressourcen entsprechen. In Abhängigkeit von einem Sicherheitsniveau des Endgeräts, das der zentrale Server ermittelt hat, wählt der Server eine passende Applikations-Konfiguration aus und konfiguriert die bereits im Endgerät befindliche Applikation passend zum Sicherheitsniveau. Beim Server muss dabei nur eine einzige Applikationsvariante vorgehalten zu werden. Über die nachträgliche Konfiguration wird dennoch eine dem Sicherheitsniveau entsprechende Applikations-Konfiguration hergestellt.

Das System und Verfahren aus WO 2011/131365 A1 setzen voraus, dass die Sicherheitsressourcen (Endgeräte-Konfiguration) eines Endgerät dem Endgerät selbst bekannt sind oder zumindest theoretisch bekannt sind. Nur so kann das Endgerät beim Server die passende Konfiguration anfordern.

Die Sicherheitsressourcen einer Mobilstation können sich allerdings ändern. Beispielsweise kann eine gesicherte Laufzeitumgebung hinzugefügt oder entfernt werden. Ebenso kann eine SIM-Karte entfernt werden. Dass die z.B. gemäß Modellnummer des Endgeräts vermuteten Sicherheitsressourcen mit den tatsächlichen Sicherheitsressourcen übereinstimmen, ist somit nicht gewährleistet.

Das Dokument US 2008/194296 A1 offenbart eine Mobilstation, mit einem Ermittlungsmodul, mit dem ein Sicherheitsniveau von Speicherbereichen der Mobilstation ableitbar ist. Abzuspeichernden Daten wie z.B. E-Mails wird ebenfalls ein Sicherheitsniveau zugeordnet. Abhängig vom Sicherheitsniveau der Daten wird zum Abspeichern der Daten ein Speicherbereich mit entsprechendem Sicherheitsniveau verwendet.

Das Dokument US 2007/240205 A1 offenbart eine Mobilstation mit unterschiedlichen Bootstrapping-Applikationen, Sicherheitsressourcen (z.B. SIM-Karte, UICC etc.) und mit einem Ermittlungsmodul, gebildet durch einen GAA Server und einen GAA Client der Mobilstation, die miteinander kommunizieren. Mit dem GAA Client ist ein Applikations-Sicherheitsniveau ermittelbar, das erreicht wird, wenn eine Bootstrapping-Applikation mit Credentials aus einer bestimmten Sicherheitsressource ausgeführt wird. Ist das Applikations-Sicherheitsniveau zu niedrig, wird die Bootstrapping-Applikation nicht ausgeführt. Ist das Sicherheitsniveau der Credentials ausreichend hoch, wird die Bootstrapping-Applikation als ausreichend sicher angesehen.

Das Dokument US 2010/306107 A1 offenbart einen Authentisierungs-Server mit einem Ermittlungsmodul TIM zum Ermitteln von Sicherheitsniveaus von Sicherheitsressourcen (z.B. SIM-Karte oder UICC oder TPM) einer Mobilstation und von Sicherheitsrisiken, die von den Sicherheitsressourcen ausgehen.

Der Erfindung liegt die Aufgabe zu Grunde, eine Mobilstation zu schaffen, die in der Lage ist, ein definiertes Sicherheitsniveau auf Applikations-Ebene zu gewährleisten. Insbesondere soll eine Mobilstation angegeben werden, mit der für in der Mobilstation implementierte oder zu implementierende Applikationen ein definiertes Applikations-Sicherheitsniveau gewährleistet werden kann. Weiter soll ein Applikationslade-System zum Laden einer Applikation in eine Mobilstation angegeben werden, bei dem für in die Mobilstation geladene Applikationen ein definiertes Applikations-Sicherheitsniveau gewährleistet werden kann.

Die Aufgabe wird gelöst durch eine Mobilstation nach Anspruch 1. Vorteilhafte Ausgestaltungen der Erfindung sind in den abhängigen Ansprüchen angegeben.

Die erfindungsgemäße Mobilstation gemäß dem unabhängigen Anspruch 1 umfasst ein mobiles Endgerät und umfasst Sicherheitsressourcen. Die Mobilstation enthält ein in der Mobilstation implementiertes Ermittlungsmodul (oder Discovery-Modul), mit dem die Sicherheitsressourcen der Mobilstation ermittelbar sind, mindestens ein mittels der Sicherheitsressourcen erzielbares Sicherheitsniveau der Mobilstation ableitbar ist und abgeleitete Sicherheitsniveaus der Mobilstation ausgebbar sind.

Das Ermittlungsmodul ermöglicht zu ermitteln, welche Sicherheitsressourcen tatsächlich in der Mobilstation vorhanden sind. Insbesondere ermöglicht das Ermittlungsmodul zu erkennen, wenn Sicherheitsressourcen aus der Mobilstation entfernt worden sind oder zur Mobilstation hinzugefügt worden sind. Die vom Ermittlungsmodul ermittelten Sicherheitsressourcen entsprechen somit dem tatsächlichen aktuellen Sicherheitszustand der Mobilstation. Ausgehend hiervon ist durch das Ermittlungsmodul ein tatsächliches aktuelles Sicherheitsniveau der Mobilstation ableitbar, unter Berücksichtigung von eventuell weggefallenen oder neu hinzugekommenen Sicherheitsressourcen. Da ein vom Ermittlungsmodul abgeleitetes und ausgegebenes Sicherheitsniveau stets aktuell ist, kann mit einer Mobilstation, die das Ermittlungsmodul enthält, ein Sicherheitsniveau der Mobilstation nicht nur vermutet sondern tatsächlich gewährleistet werden.

Erfindungsgemäß enthält die Mobilstation weiter Applikationsinformation über mindestens eine in der Mobilstation implementierte oder implementierbare Applikation. Dabei ist mit dem Ermittlungsmodul, als ein Sicherheitsniveau der Mobilstation, ein bei einem Betrieb der Applikation in der Mobilstation unter Verwendung der Sicherheitsressourcen erzielbares Applikations-Sicherheitsniveau ableitbar. Erfindungsgemäß ist somit ein Sicherheitsniveau ableitbar und ausgebbar, das erzielt wird, wenn die Applikation auf der Mobilstation ausgeführt wird. Ermittelt wird also ein Sicherheitsniveau auf Applikationsebene. Zusätzlich kann ein Sicherheitsniveau auf Geräte-Ebene ableitbar und ausgebbar sein, das unabhängig von der Ausführung einer Applikation auf der Mobilstation besteht. Von besonderer praktischer Bedeutung ist jedoch ein Sicherheitsniveau auf Applikations-Ebene, mit dem abschätzbar ist, wie sicher eine Mobilstation in Verbindung mit einer auf der Mobilstation laufenden Applikation ist.

Daher ist gemäß Anspruch 1 eine Mobilstation geschaffen, die in der Lage ist, ein definiertes Sicherheitsniveau auf Applikations-Ebene zu gewährleisten.

Wahlweise sind als Sicherheitsressourcen ein oder mehrere der folgenden Sicherheitsmodule vorgesehen: eine normale Laufzeitumgebung des Endgeräts, insbesondere mit oder ohne kryptographische Funktionen; ein im Endgerät implementiertes virtuelles Teilnehmeridentitätsmodul; eine gesicherte Laufzeitumgebung des Endgeräts; ein in dem Endgerät betreibbares Teilnehmeridentitätsmodul, insbesondere entfernbares Teilnehmeridentitätsmodul (z.B. SIM-Karte oder USIM-Karte), festimplementiertes Teilnehmeridentitätsmodul (z.B. eUICC), zertifiziertes entfernbares Teilnehmeridentitätsmodul, zertifiziertes festimplementiertes Teilnehmeridentitätsmodul; sichere Mikroprozessor-Speicherkarte, insbesondere Secure SD Karte oder/ und Secure Micro SD Karte.

Wahlweise ist durch das Ermittlungsmodul für jedes Sicherheitsmodul oder /und für jede Kombination von ein oder mehreren Sicherheitsmodulen der Mobilstation ein Sicherheitsniveau der Mobilstation ableitbar und ausgebbar. Wahlweise ist eine Mehrzahl zumindest mehrerer oder aller Sicherheitsniveaus mehrerer oder aller Sicherheitsressourcen/ Sicherheitsmodule der Mobilstation ausgebbar.

Wahlweise ist durch das Ermittlungsmodul zusammen mit dem Sicherheits-niveau diejenige Sicherheitsressource oder dasjenige Sicherheitsmodul mit ausgebbar, für die bzw. das das Sicherheitsniveau gilt.

Wahlweise ist durch das Ermittlungsmodul eine Auflistung mehrerer oder aller Sicherheitsressourcen / Sicherheitsmodule zusammen mit den zugehörigen Sicherheitsniveaus ausgebbar, z.B. als Tabelle.

Gemäß einer Ausführungsform der Mobilstation ist das Ermittlungsmodul in eine Programmierschnittstelle, insbesondere in ein sogenanntes Application Programming Interface API, integriert, mittels welcher Ausgabeinformation in Bezug auf Sicherheitsniveaus der Mobilstation aus der Mobilstation ausgebbar ist oder/und Steuerungsinformation zur Steuerung von Sicherheitsniveaus in die Mobilstation eingebbar ist.

Als Ausgabeinformation ist bzw. sind bei der Programmierschnittstelle wahlweise eines oder mehrere der folgenden ausgebbar: ein Sicherheitsniveau der Mobilstation; eine verfügbare Sicherheitsressource der Mobilstation; ein Sicherheitsniveau einer Sicherheitsressource; alle Sicherheitsniveaus aller Sicherheitsressourcen der Mobilstation; alle verfügbaren Sicherheitsressourcen der Mobilstation; das höchste verfügbare Sicherheitsniveau der Mobilstation; ein aktuell gesetztes Sicherheitsniveau der Mobilstation; Funktionalitäts-Information zu für ein oder jedes Sicherheitsniveau oder für eine oder jede Sicherheitsressource verfügbaren Funktionalitäten. Dabei hat in der Programmierschnittstelle das Ermittlungsmodul die Funktionalität, Sicherheitsressourcen und Sicherheitsniveaus zu ermitteln und auszugeben. Darüber hinausgehende Funktionalitäten, wie beispielsweise Funktionalitäts-Information bereitzustellen, werden durch andere Teile der Programmierschnittstelle durchgeführt. Als gesetztes Sicherheitsniveau ist beispielsweise dasjenige Sicherheitsniveau vorgesehen, das die Mobilstation bei ihrem Betrieb (wahlweise mindestens oder genau) erfüllen muss. Aus dem gesetzten Sicherheitsniveau folgt beispielsweise, welche Sicherheitsressource (z.B. SIM Karte, oder TEE etc.) die Mobilstation bei ihrem Betrieb verwenden muss.

In Bezug auf Funktionalitäten der Mobilstation gilt - in der Regel - der Grundsatz, dass umso mehr Funktionalitäten der Mobilstation zur Verfügung stehen, je höher das Sicherheitsniveau ist. Je niedriger das Sicherheits-niveau der Mobilstation ist, umso weniger Funktionalitäten der Mobilstation stehen zur Verfügung (d.h. sind verwendbar, z.B. aktiviert). Beispielsweise ist eine Funktionalität der Mobilstation, mit der kryptographische Berechnungen durchführbar sind, deaktiviert, falls das ermittelte Sicherheitsniveau zu niedrig ist. Wird der Mobilstation eine neue Sicherheitsressource hinzugefügt, durch welche das Sicherheitsniveau der Mobilstation erhöht wird, wird das neue Sicherheitsniveau ermittelt und die Funktionalität, mit der kryptographische Berechnungen durchführbar sind, freigeschaltet oder aktiviert, ist also nachfolgend verwendbar.

Da als Sicherheitsniveaus Applikations-Sicherheitsniveaus abgeleitet und ausgegeben werden, ist insbesondere auch die Funktionalitäts-Information auf eine Applikation bezogen. Beispielsweise ist als auf eine Applikation bezogene Funktionalitäts-Information Information vorgesehen, welche Applikations-Funktionalitäten bei einem abgeleiteten Applikations-Sicherheits-niveau zur Verfügung stehen, oder generell, welche Applikations-Funktionalität bei welchem abgeleiteten Applikations-Sicherheitsniveau zur Verfügung steht. Ein gesetztes Applikations-Sicherheitsniveau kann beispielsweise dadurch verwirklicht sein, dass eine Applikation in eine dem gesetzten Applikations-Sicherheitsniveau entsprechende Sicherheitsressource geladen werden muss. Wahlweise kann ein Mindest-Applikations-Sicherheitsniveau gesetzt sein, so dass eine Applikation in eine Sicherheitsressource geladen werden muss, die mindestens das Mindest-Applikations-Sicherheitsniveau erfüllt.

Wahlweise hat die Steuerungsinformation eines oder mehrere der folgenden zum Inhalt: Festlegen der Nutzung einer bestimmten Sicherheitsressource mit einem bestimmten Sicherheitsniveau; Festlegen der Nutzung derjenigen Sicherheitsressource, die das höchste Sicherheitsniveau hat. In dem Fall, dass als Sicherheitsniveau ein Applikations-Sicherheitsniveau vorgesehen ist, ist das Festlegen der Nutzung einer bestimmten Sicherheitsressource mit einem bestimmten Sicherheitsniveau beispielsweise dadurch verwirklicht, dass eine zu implementierende oder /und auszuführende Applikation in der Sicherheitsressource mit dem bestimmten Sicherheitsniveau implementiert oder /und ausgeführt wird. Das Festlegen der Nutzung der Sicherheitsressource mit dem höchsten Applikations-Sicherheitsniveau bedeutet beispielsweise, dass die Applikation in der Sicherheitsressource mit dem höchsten Sicherheitsniveau implementiert bzw. ausgeführt wird.

Wahlweise ist das Ermittlungsmodul in derjenigen Sicherheitsressource der Mobilstation implementiert, die der Mobilstation das höchste Sicherheitsniveau liefert oder verleiht. Hierdurch wird sichergestellt, dass das Ermittlungsmodul vor Manipulationen geschützt ist. Manipulationen könnten beispielsweise darauf abzielen, nicht vorhandene Sicherheitsressourcen vorzutäuschen, daraus ein unzutreffend hohes Sicherheitsniveau fälschlich abzuleiten und einen unzulässig hohen Funktionsumfang der Mobilstation oder einer darauf implementierten Applikation zu aktivieren.

Wahlweise ist das Ermittlungsmodul in einer fest in dem Endgerät implementierten Sicherheitsressource der Mobilstation implementiert, um ein Entfernen des Ermittlungsmoduls DIS aus der Mobilstation zu verhindern.

Falls die Mobilstation eine entfernbare SIM-Karte hat, kann die Vorgabe, das Ermittlungsmodul in einer festimplementierten Sicherheitsressource vorzusehen, mit der ebenfalls wünschenswerten Vorgabe kollidieren, dass das Ermittlungsmodul in der Sicherheitsressource implementiert ist, die das höchste Sicherheitsniveau liefert. Gemäß einer Option ist das Ermittlungs modul in derjenigen festimplementierten Sicherheitsressource vorgesehen, die das höchste Sicherheitsniveau hat, z.B. in einem festimplementierten Teilnehmeridentitätsmodul (z.B. eUICC), alternativ in einer sicheren Laufzeitumgebung. Im Fall der sicheren Laufzeitumgebung werden zugunsten der Ortsfestigkeit des Ermittlungsmoduls Abstriche in Bezug auf die Angriffssicherheit im Kauf genommen. Gemäß einer anderen Option ist das Ermittlungsmodul in einem entfernbaren Teilnehmeridentitätsmodul (z.B. SIM-Karte) vorgesehen. Hierbei werden zugunsten der Angriffssicherheit Abstriche in Bezug auf das Verhindern des Entfernens des Ermittlungsmoduls gemacht.

Wahlweise hat die Mobilstation weiter ein mit dem Ermittlungsmodul gekoppeltes oder koppelbares Applikations-Steuerungsmodul, durch das, abhängig von dem für eine Applikation abgeleiteten Applikations-Sicherheits-niveau, die Ausführung der Applikation in einem dem Applikations-Sicherheitsniveau entsprechenden Funktionsumfang steuerbar ist. Das Steuern der Ausführung der Applikation umfasst dabei wahlweise, dass die Applikation im festgesetzten Funktionsumfang unmittelbar ausgeführt wird. Alternativ umfasst das Steuern der Ausführung, dass die Applikation im festgesetzten Funktionsumfang aktiviert wird, d.h. in Funktionsfähigkeit gesetzt wird, im festgesetzten Funktionsumfang ausgeführt zu werden, ohne dass die Applikation unmittelbar ausgeführt wird.

Wahlweise ist als Ausführung der Applikation in einem dem Sicherheitsniveau entsprechenden Funktionsumfang eines der folgenden vorgesehen, in einer Reihenfolge mit sinkendem Funktionsumfang: Ausführung der Applikation in erweitertem Funktionsumfang; Ausführung der Applikation in vollem Funktionsumfang; Ausführung der Applikation in eingeschränktem Funktionsumfang; Nichtausführung der Applikation. Dabei kann ein erweiterter Funktionsumfang gegenüber dem vollen Funktionsumfang insbesondere durch solche Zusatz-Funktionalitäten oder Zusatzdienste erweitert sein, die von einer Kernfunktionalität der Applikation abweichen.

Eine Mobilstation mit einem Ermittlungsmodul, mit dem ein Sicherheitsniveau auf Applikationsniveau ableitbar und ausgebbar ist, wird beispielsweise wie folgt betrieben.

In der Mobilstation ist eine Applikation implementiert. Die Applikation wird gerade nicht ausgeführt und soll zur Ausführung gebracht werden. Mit dem Ermittlungsmodul werden die aktuell gerade vorhandenen und in Betrieb befindlichen Sicherheitsressourcen der Mobilstation ermittelt, z.B. normale und/ oder sichere Laufzeitumgebung, SIM-Karte, eUICC, Secure (Micro) SD Karte etc. Dem Ermittlungsmodul wird Information bereitgestellt, welche Applikation in der Mobilstation betrieben werden soll. Ob dabei zuerst die Sicherheitsressourcen ermittelt werden oder zuerst die Information über die Applikation an das Ermittlungsmodul bereitgestellt wird, ist in der Regel gleichgültig. Anhand der ermittelten Sicherheitsressourcen wird ein Sicherheitsniveau der Applikation abgeleitet und ausgegeben. In Abhängigkeit vom abgeleiteten und ausgegebenen Sicherheitsniveau wird die Ausführung der Applikation in einem dem Sicherheitsniveau entsprechendem Funktionsumfang gesteuert, indem die Applikation entweder unmittelbar ausgeführt wird oder zumindest in einen ausführbaren Zustand versetzt wird (aktiviert wird), um später ausgeführt zu werden.

Beispielsweise wird bei einem geringen ermittelten Sicherheitsniveau die Applikation gar nicht ausgeführt und bleibt deaktiviert, da das Sicherheitsrisiko auf Grund einer Applikationsausführung auf der Mobilstation als zu groß gesehen wird. So wird verhindert, dass mangelhafte Sicherheitsressourcen einer Mobilstation das Image einer an sich vertrauenswürdigen Applikation schädigen.

Gemäß einem weiteren Beispiel wird bei einem mittleren ermittelten Sicherheitsniveau die Applikation in einem eingeschränkten Funktionsumfang ausgeführt (bzw. in einem solchen Funktionsumfang aktiviert). Insbesondere können besonders sicherheitskritische Funktionalitäten der Applikation deaktiviert bleiben, und nur Funktionalitäten der Applikation, die gering oder höchstens mittel sicherheitskritisch sind, werden aktiviert, und sind somit ausführbar.

Gemäß einem weiteren Beispiel wird bei einem hohen ermittelten Sicherheitsniveau die Applikation in vollem Funktionsumfang ausgeführt oder aktiviert, d.h. ausführbar gemacht. Insbesondere werden auch besonders sicherheitskritische Funktionalitäten der Applikation aktiviert und sind somit ausführbar.

Eine Programmierschnittstelle mit einem Ermittlungsmodul, mit dem Applikations-Sicherheitsniveaus ableitbar und ausgebbar sind, kann insbesondere dazu eingerichtet sein, folgende Funktionalitäten anzubieten, die nachfolgend in einer denkbaren Pseudo-Kommando-Sprache mit nachfolgender Beschreiben der Funktionalität angegeben sind:
getSecDevices(): Ermitteln aller in der Mobilstation verfügbaren Sicherheitsressourcen und Ableiten und Ausgeben des Applikations-Sicherheitsniveaus jeder ermittelten Sicherheitsressource;
validateSecService(): Bereitstellen von Funktionalitäts-Information darüber, bei welchem Applikations-Sicherheitsniveau bzw. bei welcher Applikationsvariante welche Applikations-Funktionalitäten zur Verfügung stehen; oder alternativ oder zusätzlich: Ermitteln, welches Applikations-Sicherheitsniveau gewählt werden muss, damit eine gewünschte Applikations-Funktionalität zur Verfügung steht;
getHighestSecLevel(): Ableiten und Ausgeben des höchsten in der Mobilstation verfügbaren Sicherheitsniveaus;
selectSecLevel(): Festlegen eines Applikations-Sicherheitsniveaus für eine zu implementierende oder/und auszuführende Applikation, und hierdurch implizit Festlegen einer dem Applikations-Sicherheitsniveaus entsprechenden Sicherheitsressource, in welcher die Applikation implementiert bzw. ausgeführt wird;
getSelectedSecLevel(): Ermitteln des aktuell gesetzten Applikations-Sicherheitsniveaus, das in der Regel gesetzt wurde durch ein vorausgehendes selectSecLevel();
HighestSecLevel(): Festlegen des höchsten verfügbaren Applikations-Sicherheitsniveaus für eine zu implementierende oder/und auszuführende Applikation, und hierdurch implizit Festlegen der dem höchsten Applikations-Sicherheitsniveaus entsprechenden Sicherheitsressource, in welcher die Applikation implementiert bzw. ausgeführt wird.

Ein erfindungsgemäßes Applikationslade-System umfasst einen Applikations-Server und eine Mobilstation wie obenstehend angegeben. Dabei ist der Applikations-Server gekennzeichnet durch ein mit dem Ermittlungsmodul gekoppeltes oder koppelbares Applikations-Auswahlmodul, durch das, abhängig von dem für eine Applikation abgeleiteten Applikations-Sicherheitsniveau, eine Applikationsvariante mit einem dem Sicherheitsniveau entsprechenden Funktionsumfang auswählbar und zum Herunterladen an die Mobilstation bereitstellbar ist.

Ähnlich wie weiter oben ein dem Sicherheitsniveau entsprechender Funktionsumfang einer bereits implementierten Applikation aktiviert wurde, wird hier zum Herunterladen auf die Mobilstation eine Applikationsvariante der Applikation bereitgestellt, die auf die Sicherheitsressourcen der Mobilstation abgestimmt ist. Bei einem hohen abgeleiteten und ausgegebenen Sicherheitsniveau wird beispielsweise eine Applikationsvariante mit hohem Funktionsumfang bereitgestellt. Bei einem niedrigen abgeleiteten und ausgegebenen Sicherheitsniveau wird beispielsweise eine Applikationsvariante mit niedrigem Funktionsumfang bereitgestellt. Der Funktionsumfang ist dabei wahlweise durch Vorhandensein oder Fehlen von Funktionskomponenten der Applikation in der jeweiligen Funktionsvariante festgelegt. Wahlweise ist der Funktionsumfang dadurch festgelegt, dass Funktionskomponenten aktiviert bzw. deaktiviert sind, entsprechend dem gewünschten Funktionsumfang.

Wahlweise umfasst die bereitstellbare Applikationsvariante: die Applikation mit dem dem Sicherheitsniveau entsprechenden Funktionsumfang oder /und zur Ergänzung der Applikation bestimmte Zusatzfunktionalitäten (Zusatzdienste).

Bei einem Verfahren zum Herunterladen einer Applikationsvariante in eine Mobilstation wird das Applikations-Auswahlmodul des Applikations-Servers mit dem Ermittlungsmodul der Mobilstation gekoppelt. Insbesondere werden also die Mobilstation und der Applikations-Server miteinander gekoppelt, wahlweise über eine kontaktbehaftete Verbindung oder alternativ über eine kontaktlose Funkverbindung, insbesondere Mobilfunkverbindung oder andere Funkverbindung. Mit dem Ermittlungsmodul wird ein Applikations-Sicherheitsniveau ermittelt und ausgegeben. Dies kann wahlweise erfolgen, während die Mobilstation Verbindung zum Applikations-Server hat, oder an einem früheren Zeitpunkt. Das ermittelte und ausgegebene Applikations-Sicherheitsniveau wird an das Applikations-Auswahlmodul übermittelt. Abhängig vom Applikations-Sicherheitsniveau wird durch das Applikations-Auswahlmodul eine dem Applikations-Sicherheitsniveau entsprechende Applikationsvariante mit einem dem Applikations-Sicherheitsniveau entsprechenden Funktionsumfang ausgewählt und auf dem Applikations-Server zum Herunterladen an die Mobilstation bereitgestellt. Schließlich wird die bereitgestellte Applikationsvariante vom Applikations-Server auf die Mobilstation heruntergeladen.

Ein erfindungsgemäßes Risikoabschätzungs-System umfasst eine oder mehrere Mobilstationen und einen Risiko-Server. In mindestens einer Mobilstation ist mindestens eine Applikation enthalten (implementiert). Der Applikations-Server ist gekennzeichnet durch ein mit dem Ermittlungsmodul gekoppeltes oder koppelbares Risiko-Abschätzungs-Modul, durch das, abhängig vom Applikations-Sicherheitsniveau der in der Mobilstation bzw. in den Mobilstationen enthaltenen Applikation bzw. Applikationen ein von der Mobilstation oder den mehreren Mobilstationen ausgehendes Risiko ableitbar ist. Wahlweise gehen in das Risiko weitere Parameter ein, z.B. Anzahl in Umlauf befindlicher Mobilstationen, Anzahl oder Anteil (z.B. Prozentsatz) der in Umlauf befindlichen Mobilstationen, in denen Applikationen mit zu geringem Sicherheitsniveau implementiert sind und dergleichen.

Im Folgenden wird die Erfindung an Hand von Ausführungsbeispielen und unter Bezugnahme auf die Zeichnung näher erläutert, in der zeigen:
- Fig. 1: eine Mobilstation mit Sicherheitsressourcen und einem Ermittlungsmodul, gemäß einer Ausführungsform der Erfindung;
- Fig. 2: eine Zuordnungstabelle zwischen Sicherheitsressourcen und Sicherheitsniveaus, gemäß einer Ausführungsform der Erfindung;
- Fig. 3: eine Zuordnungstabelle zwischen Sicherheitsressourcen, Applikations-Sicherheitsniveaus, Funktionsumfängen und Applikationsvarianten, gemäß einer Ausführungsform der Erfindung;
- Fig. 4: ein Aktivieren einer bereits implementierten Applikation, gemäß einer Ausführungsform der Erfindung;
- Fig. 5: ein Auswählen und Herunterladen einer zu implementierenden Applikation, gemäß einer Ausführungsform der Erfindung;
- Fig. 6: ein Auswählen und Herunterladen einer zu implementierenden Applikation, gemäß einer weiteren Ausführungsform der Erfindung.

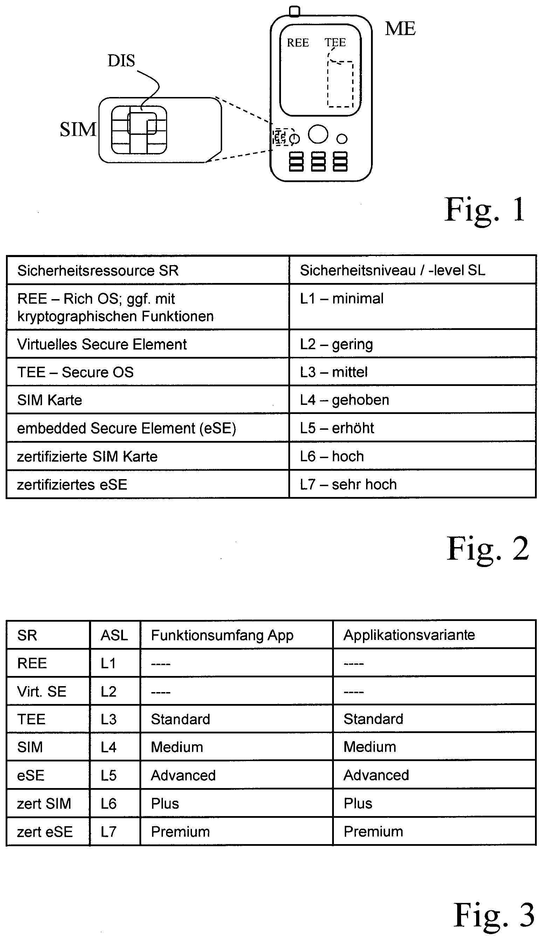

Fig. 1 zeigt eine Mobilstation. Die Mobilstation umfasst ein Endgerät ME. Die Mobilstation umfasst weiter als Sicherheitsressourcen SR drei Sicherheitsmodule, nämlich erstens eine normale Laufzeitumgebung REE (Rich Execution Environment), zweitens eine sichere Laufzeitumgebung TEE (Trusted Execution Environment) und drittens eine SIM Karte SIM. Weiter umfasst die Mobilstation ein Ermittlungsmodul DIS (Discovery Modul), gemäß einer Ausführungsform der Erfindung. Von den drei Sicherheitsmodulen, durch welche die Sicherheitsressourcen SR der Mobilstation gebildet sind, hat die SIM Karte das höchste Sicherheitsniveau, die sichere Laufzeitumgebung das zweithöchste und die normale Laufzeitumgebung das niedrigste Sicherheitsniveau. Das Ermittlungsmodul DIS ist in der SIM Karte SIM der Mobilstation angeordnet (implementiert), die unter den Sicherheitsressourcen das höchste Sicherheitsniveau hat.

Fig. 2 zeigt eine Zuordnungstabelle zwischen Sicherheitsressourcen SR und Sicherheitsniveaus SL einer Mobilstation, gemäß einer Ausführungsform der Erfindung. Das Sicherheitsniveau SL und somit die Sicherheit und Vertrauenswürdigkeit der Mobilstation steigt in der Tabelle von oben nach unten. Eine normale durch ein Normalbetriebssystem Rich OS gesteuerte Laufzeitumgebung REE hat aus der Zuordnungstabelle das niedrigste Sicherheitsniveau L1 - minimal. Ein in einem Endgerät ME implementiertes virtuelles Secure Element SE hat ein etwas höheres, geringes Sicherheitsniveau L2. Eine im Endgerät ME implementierte, durch ein Sicherheitsbetriebssystem Secure OS gesteuerte sichere Laufzeitumgebung hat ein mittleres Sicherheitsniveau L3. Eine SIM Karte hat ein gehobenes Sicherheitsniveau L4. Ein festimplementiertes embedded Secure Element eSE (z.B. eUICC) hat ein erhöhtes Sicherheitsniveau L5. Eine zertifizierte SIM Karte hat ein hohes Sicherheitsniveau L6, ein zertifiziertes embedded Secure Element eSE hat ein sehr hohes Sicherheitsniveau L7.

Fig. 3 zeigt eine Zuordnungstabelle zwischen Sicherheitsressourcen SR, Applikations-Sicherheitsniveaus ASL bezogen auf eine für eine Mobilstation vorgesehene Applikation APP, Funktionsumfängen der Applikation und Applikationsvarianten der Applikation, gemäß einer Ausführungsform der Erfindung. Analog wie bei der Zuordnungstabelle aus Fig. 2 steigt bei der Zuordnungstabelle aus Fig. 3 das Applikations-Sicherheitsniveau von oben nach unten. Ebenso steigt der Funktionsumfang der Applikation von oben nach unten. Insbesondere kommen von oben nach unten zunehmend sicherheitskritische Funktionalitäten zum Funktionsumfang hinzu.

Die Applikation APP ist dazu vorgesehen, in einer Mobilstation implementiert zu werden. Die Applikation APP hat die Möglichkeit, ein definiertes Sicherheitsniveau zu gewährleisten, sofern die Sicherheitsressourcen SR der Mobilstation dafür ausreichend sicher sind. Abhängig davon, in welche Sicherheitsressource (Sicherheitsmodul, Komponente) (z.B. Endgerät REE oder TEE oder SIM Karte) der Mobilstation die Applikation APP implementiert werden soll, werden unterschiedliche Applikationsvarianten bereitgestellt.

Die beiden niedrigsten Applikations-Sicherheitsniveaus L1, L2 und damit die Sicherheitsressourcen / Sicherheitsmodule normale Laufzeitumgebung REE und virtuelles SE werden als so unzureichend sicher eingestuft, dass der Applikation kein Funktionsumfang zugestanden wird. Folglich steht für eine normale Laufzeitumgebung und ein virtuelles Secure Element keine Applikationsvariante der Applikation zur Verfügung.

Für eine sichere Laufzeitumgebung TEE, gesteuert durch ein Sicherheitsbetriebssystem Secure OS, garantiert die Applikation ein mittleres Applikations-Sicherheitsniveau L3, sofern die Applikation nur höchstens im Standard Funktionsumfang betrieben wird. Folglich wird zur Implementierung in eine sichere Laufzeitumgebung TEE einer Mobilstation die Applikationsvariante Standard bereitgestellt, die den Funktionsumfang Standard der Applikation APP abdeckt.

Eine SIM Karte liefert der Applikation APP ein gehobenes Applikations-Sicherheitsniveau L4. Folglich können im Funktionsumfang der Applikation APP für die SIM Karte, zusätzlich zum Funktionsumfang für eine sichere Laufzeitumgebung TEE, einige eher sicherheitskritische Funktionalitäten enthalten sein, entsprechend dem Funktionsumfang Medium, der größer ist als der Funktionsumfang Standard. Für die SIM Karte wird somit die Applikationsvariante Medium bereitgestellt.

Für ein embedded Secure Element eSE, in dem die Applikation APP, wenn sie darin implementiert wird, ein Applikations-Sicherheits-Niveau L5 gewährleistet, wird die Applikationsvariante Advanced mit erhöhtem Funktionsumfang Advanced bereitgestellt.

Für eine zertifizierte SIM Karte wird die Applikationsvariante Plus bereitgestellt.

Für ein zertifiziertes embedded Secure Element eSE schließlich wird die Applikationsvariante Premium mit dem höchsten verfügbaren Funktionsumfang Premium bereitgestellt.

Premium ist dabei wahlweise der volle Funktionsumfang, wobei die Funktionsumfänge Standard, Medium, Advanced und Plus unterschiedlich stark eingeschränkte Funktionsumfänge sind.

Alternativ ist ein anderer Funktionsumfang, beispielsweise Medium, der "volle" Funktionsumfang. Bei dieser Alternative ist Standard ein eingeschränkter Funktionsumfang und sind Advanced, Plus und Premium um Zusatzdienste bzw. Zusatzfunktionalitäten erweiterte Funktionsumfänge.

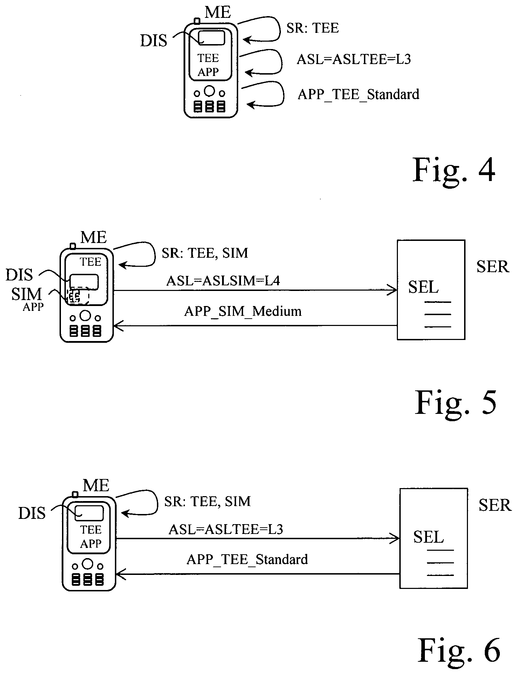

Fig. 4 zeigt ein Aktivieren einer bereits in einer Mobilstation implementierten Applikation APP, die in einer sicheren Laufzeitumgebung TEE laufen soll, gemäß einer Ausführungsform der Erfindung. Die Mobilstation umfasst ein Endgerät ME, von dem angenommen wird, dass es eine gesicherte Laufzeitumgebung TEE hat. In der Mobilstation, vorzugsweise in einer SIM Karte oder einem embedded Secure Element eSE der Mobilstation (nicht dargestellt), ist ein Ermittlungsmodul DIS implementiert. Das Ermittlungsmodul DIS ermittelt, dass die Sicherheitsressource SR sichere Laufzeitumgebung TEE tatsächlich vorhanden ist, also z.B. nicht mittlerweile deinstalliert worden ist. Entsprechend wird der Mobilstation in Bezug auf die Applikation APP das Applikations-Sicherheitsniveau L3 gemäß Fig. 3 zugeordnet. Die Applikation APP wird somit mit einem Funktionsumfang Standard aktiviert.

Fig. 5 zeigt ein Auswählen und Herunterladen einer zu implementierenden Applikation APP, gemäß einer Ausführungsform der Erfindung. Die Applikation APP steht auf einem Applikations-Server SER bereit und soll in die SIM Karte SIM einer Mobilstation geladen werden, welche ein mobiles Endgerät ME und die SIM Karte umfasst. In der SIM-Karte ist ein Ermittlungsmodul DIS implementiert. Mit dem Ermittlungsmodul DIS wird ermittelt, dass die Mobilstation als Sicherheitsressourcen SR die SIM Karte und die sichere Laufzeitumgebung TEE des Endgeräts ME hat. Insbesondere wird ermittelt, dass die SIM Karte tatsächlich vorhanden ist. Der Applikation APP wird mittels des Ermittlungsmoduls DIS der Mobilstation in Bezug auf die SIM Karte das Applikations-Sicherheitsniveau L4 gemäß der Zuordnungstabelle aus Fig. 3 zugeordnet. Das Applikations-Sicherheitsniveau L4 wird von der Mobilstation an den Applikations-Server SER übermittelt. Im Applikations-Server SER wird das übermittelte Applikations-Sicherheitsniveau L4 vom Applikations-Auswahlmodul SEL entgegengenommen, das die dem Applikations-Sicherheitsniveau L4 entsprechende Applikationsvariante Medium für die SIM Karte auswählt und an die Mobilstation sendet, zur Implementierung in der SIM Karte. Schließlich wird die Applikation APP in der Applikationsvariante Medium in der SIM Karte implementiert.

Fig. 6 zeigt ein zu Fig. 5 analoges Auswählen und Herunterladen einer zu implementierenden Applikation APP, gemäß einer weiteren Ausführungsform der Erfindung. Im Unterschied zu Fig. 5 wird in Fig. 6 eine Applikation für eine sichere Laufzeitumgebung TEE heruntergeladen. Das Ermittlungsmodul DIS ist in der SIM Karte implementiert (Sicherheitsressource SR, die das höchste Sicherheitsniveau liefert). Als Sicherheitsressourcen SR werden die SIM Karte und die sichere Laufzeitumgebung TEE ermittelt. Da die Applikation in die sichere Laufzeitumgebung TEE geladen werden soll, ist das maßgebliche Applikations-Sicherheitsniveau ASL nun das der sicheren Laufzeitumgebung TEE, also L3. L3 wird vom Ermittlungsmodul DIS als maßgebliches Applikations-Sicherheitsniveau ASL ermittelt und an den Applikations-Server SER bereitgestellt. Das Applikations-Auswahlmodul SEL wählt die dem Applikations-Sicherheitsniveau L3 entsprechende Applikationsvariante Standard aus und sendet sie an die Mobilstation, zur Implementierung in der sicheren Laufzeitumgebung TEE. Schließlich wird die Applikation APP in der Applikationsvariante Standard in der sicheren Laufzeitumgebung TEE implementiert.

Bei den Ausführungsformen aus Fig. 5, 6 ist das Ermittlungsmodul DIS in der SIM-Karte implementiert, da diese das höchste Sicherheitsniveau liefert. Alternativ kann vorgesehen sein, dass das Ermittlungsmodul DIS stets in einer fest im Endgerät ME implementierten Sicherheitsressource implementiert ist, um ein Entfernen des Ermittlungsmoduls DIS aus der Mobilstation zu verhindern.

## Patentansprüche

1. Mobilstation umfassend:
- ein mobiles Endgerät (ME),
- Sicherheitsressourcen (SR),
- ein in der Mobilstation implementiertes Ermittlungsmodul (DIS) eingerichtet zum:
- Ermitteln der Sicherheitsressourcen (SR) der Mobilstation,
- Ableiten von mindestens einem mittels der Sicherheitsressourcen (SR) erzielten Sicherheitsniveau (SL) der Mobilstation und
- Ausgeben des abgeleiteten Sicherheitsniveaus (SL) der Mobilstation,
**dadurch gekennzeichnet,**
- **dass** die Mobilstation weiter Applikationsinformation über mindestens eine in der Mobilstation implementierte oder zu implementierende Applikation (APP) enthält, wobei mit dem Ermittlungsmodul (DIS), als Sicherheitsniveau, ein bei einem Betrieb der Applikation (APP) in der Mobilstation unter Verwendung der Sicherheitsressourcen (SR) erzieltes Applikations-Sicherheitsniveau (ASL) zusätzlich zu einem unabhängig vom Betrieb der Applikation (APP) in der Mobilstation ausgegebenen Sicherheitsniveau (SL) abgeleitet und ausgegeben wird, und
- **dass** ein mit dem Ermittlungsmodul (DIS) gekoppeltes Applikations-Steuerungsmodul dazu eingerichtet ist, die Ausführung der Applikation (APP) in einem vom abgeleiteten Applikations-Sicherheitsniveau (ASL) der Applikation (APP) abhängigen Funktionsumfang zu steuern, wobei die Applikation in einem erweiterten Funktionsumfang, in einem vollen Funktionsumfang, in einem eingeschränkten Funktionsumfang und deaktiviert ausführbar ist und mit steigendem Funktionsumfang der Applikation (APP) sicherheitskritische Funktionalitäten zum Funktionsumfang hinzugefügt werden.

2. Mobilstation nach Anspruch 1, wobei als Sicherheitsressourcen (SR) ein oder mehrere der folgenden Sicherheitsmodule vorgesehen sind: eine normale Laufzeitumgebung (REE) des Endgeräts (ME), insbesondere mit oder ohne kryptographische Funktionen; ein im Endgerät (ME) implementiertes virtuelles Teilnehmeridentitätsmodul; eine gesicherte Laufzeitumgebung (TEE) des Endgeräts (ME); ein in dem Endgerät (ME) betreibbares Teilnehmeridentitätsmodul, insbesondere entfernbares Teilnehmeridentitätsmodul (SIM), festimplementiertes Teilnehmeridentitätsmodul (eSE), zertifiziertes entfernbares Teilnehmeridentitätsmodul, zertifiziertes festimplementiertes Teilnehmeridentitätsmodul; sichere Mikroprozessor-Speicherkarte, insbesondere Secure SD Karte oder/und Secure Micro SD Karte.

3. Mobilstation nach Anspruch 2, wobei für jedes Sicherheitsmodul oder /und für jede Kombination von ein oder mehreren Sicherheitsmodulen der Mobilstation ein Sicherheitsniveau (SL) abgeleitet und ausgegeben wird.

4. Mobilstation nach einem der Ansprüche 1 bis 3, wobei das Ermittlungsmodul (DIS) in eine Programmierschnittstelle (API) integriert ist, die eingerichtet ist:
- Ausgabeinformation in Bezug auf Sicherheitsniveaus (SL) der Mobilstation aus der Mobilstation auszugeben oder/und
- Steuerungsinformation zur Steuerung von Sicherheitsniveaus in die Mobilstation einzugeben.

5. Mobilstation nach Anspruch 4, wobei als Ausgabeinformation eines oder mehrere der folgenden ausgebbar ist bzw. sind: ein Sicherheitsniveau (SL) der Mobilstation; eine verfügbare Sicherheitsressource (SR) der Mobilstation; ein Sicherheitsniveau (SL) einer Sicherheitsressource (SR); alle Sicherheitsniveaus (SL) aller Sicherheitsressourcen (SR) der Mobilstation; alle verfügbaren Sicherheitsressourcen (SR) der Mobilstation; das höchste verfügbare Sicherheitsniveau (SL) der Mobilstation; ein aktuell gesetztes Sicherheitsniveau (SL) der Mobilstation; Funktionalitäts-Information zu für ein oder jedes Sicherheitsniveau (SL) oder für eine oder jede Sicherheitsressource (SR) verfügbaren Funktionalitäten.

6. Mobilstation nach Anspruch 4 oder 5, wobei die Steuerungsinformation eines oder mehrere der folgenden zum Inhalt hat: Festlegen der Nutzung einer bestimmten Sicherheitsressource (SR) mit einem bestimmten Sicherheitsniveau (SL); Festlegen der Nutzung derjenigen Sicherheitsressource (SR), die das höchste Sicherheitsniveau (SL) hat.

7. Mobilstation nach einem der Ansprüche 1 bis 6, wobei das Ermittlungsmodul (DIS) in derjenigen Sicherheitsressource (SR) der Mobilstation implementiert ist, die der Mobilstation das höchste Sicherheitsniveau (SL) liefert.

8. Mobilstation nach einem der Ansprüche 1 bis 6, wobei das Ermittlungsmodul (DIS) in einer fest in dem Endgerät (ME) implementierten Sicherheitsressource (SR) der Mobilstation implementiert ist.

9. Applikationslade-System umfassend eine Mobilstation nach einem der Ansprüche 1 bis 8 und umfassend einen Applikations-Server (SER),
wobei der Applikations-Server (SER) **gekennzeichnet ist durch**
ein mit dem Ermittlungsmodul (DIS) gekoppeltes Applikations-Auswahlmodul (SEL), eingerichtet zum, abhängig von dem für eine Applikation (APP) abgeleiteten Applikations-Sicherheitsniveau (ASL), Auswählen einer Applikationsvariante mit einem dem Applikations-Sicherheitsniveau (ASL) entsprechenden Funktionsumfang und Bereitstellen der ausgewählten Applikationsvariante zum Herunterladen an die Mobilstation.

10. Applikationslade-System nach Anspruch 9, wobei die bereitgestellte Applikationsvariante umfasst: die Applikation (APP) mit dem dem Applikations-Sicherheitsniveau (ASL) entsprechenden Funktionsumfang oder/und zur Ergänzung der Applikation (APP) bestimmte Funktionalitäten, insbesondere Zusatzfunktionalitäten.

11. Risikoabschätzungs-System umfassend ein oder mehrere Mobilstationen nach einem der Ansprüche 1 bis 8 und einen Risiko-Server,
wobei in mindestens einer Mobilstation mindestens eine Applikation (APP) enthalten ist,
wobei der Risiko-Server **gekennzeichnet ist durch**
ein mit dem Ermittlungsmodul (DIS) gekoppeltes Risiko-Abschätzungs-Modul, eingerichtet zum, abhängig vom Applikations-Sicherheitsniveau (ASL) der in der Mobilstation bzw. in den Mobilstation enthaltenen Applikation bzw. Applikationen (APP), Ableiten eines von der Mobilstation oder den mehreren Mobilstationen ausgehendes Risiko.

## Claims

1. A mobile station comprising:
- a mobile terminal (ME),
- security resources (SR),
- a discovery module (DIS) implemented in the mobile station and configured to:
- determining the security resources (SR) of the mobile station,
- deriving at least one security level (SL) of the mobile station achieved by means of the security resources (SR), and
- outputting of the derived security level (SL) of the mobile station,
**characterized in:**
- **that** the mobile station further contains application information about at least one application (APP) implemented or to be implemented in the mobile station, wherein the discovery module (DIS) being used to derive and output an application security level (ASL), as security level, achieved during operation of the application (APP) in the mobile station using the security resources (SR) in addition to a security level (SL) output independently of the operation of the application (APP) in the mobile station, and
- **that** an application control module coupled to the discovery module (DIS) is configured to control the execution of the application (APP) in a range of functions being dependent on the derived application security level (ASL) of the application (APP), wherein the application being executable in an extended range of functions, being executable in a full range of functions, being executable in a restricted range of functions, and being executable in deactivated manner, and security-critical functionalities being added to the range of functions as the range of functions of the application (APP) increases.

2. The mobile station according to claim 1, wherein one or more of the following security modules are provided as security resources (SR): a normal runtime environment (REE) of the mobile terminal (ME), in particular with or without cryptographic functions; a virtual subscriber identity module implemented in the mobile terminal (ME); a secure runtime environment (TEE) of the mobile terminal (ME); a subscriber identity module operable in the mobile terminal (ME), in particular a removable subscriber identity module (SIM), hard-implemented subscriber identity module (eSE), certified removable subscriber identity module, certified hard-implemented subscriber identity module; secure microprocessor memory card, in particular secure SD card and/or secure micro SD card.

3. The mobile station according to claim 2, wherein a security level (SL) is derived and issued for each security module and/or for each combination of one or more security modules of the mobile station.

4. The mobile station according to any one of claims 1 to 3, wherein the discovery module (DIS) is integrated into a programming interface (API) being configured to:
- outputting, from the mobile station, output-information relating to security levels (SL) of the mobile station; or/and
- entering control information for controlling security levels in the mobile station.

5. The mobile station according to claim 4, wherein one or more of the following can be, respectively are, output as output information: a security level (SL) of the mobile station; an available security resource (SR) of the mobile station; a security level (SL) of a security resource (SR); all security levels (SL) of all security resources (SR) of the mobile station; all available security resources (SR) of the mobile station; the highest available security level (SL) of the mobile station; a currently set security level (SL) of the mobile station; functionality information on functionalities available for one or each security level (SL) or for one or each security resource (SR).

6. The mobile station according to claim 4 or 5, wherein the control information has one or more of the following as content: determining the use of a particular security resource (SR) having a particular security level (SL); determining of using the security resource (SR) having the highest security level (SL).

7. The mobile station according to one of claims 1 to 6, wherein the discovery module (DIS) is implemented in that security resource (SR) of the mobile station which provides the mobile station with the highest security level (SL).

8. The mobile station according to one of claims 1 to 6, wherein the discovery module (DIS) is implemented in a security resource (SR) of the mobile station which is hard-implemented in the mobile terminal (ME).

9. An application loading system comprising a mobile station according to any one of claims 1 to 8 and comprising an application server (SER),
wherein the application server (SER) is **characterized by**
an application selection module (SEL) coupled to the discovery module (DIS) being configured to, depending on the application security level (ASL) derived for an application (APP), selecting an application variant with a range of functions corresponding to the application security level (ASL), and providing the selected application variant for downloading to the mobile station.

10. The application loading system according to claim 9, wherein the provided application variant comprises: the application (APP) with the range of functions corresponding to the application security level (ASL) or/and particular functionalities, notably additional functionalities, for supplementing the application (APP).

11. A risk assessment system comprising one or more mobile stations according to one of claims 1 to 8 and a risk server,
wherein at least one application (APP) is contained in at least one mobile station,
wherein the risk server is **characterized by**
a risk estimation module coupled to the discovery module (DIS) being configured to, depending on the application security level (ASL) of the application or applications (APP) contained in the mobile station or the mobile stations, deriving a risk originating from the mobile station or the mobile stations.

## Revendications

1. Station mobile comportant :
- un terminal mobile (ME),
- des ressources de sécurité (SR),
- un module de détermination (DIS) implémenté dans la station mobile, configuré pour :
- déterminer les ressources de sécurité (SR) de la station mobile,
- déduire au moins un niveau de sécurité (SL) de la station mobile obtenu au moyen des ressources de sécurité (SR) et
- générer le niveau de sécurité (SL) déduit de la station mobile,
**caractérisée en ce que**
- la station mobile contient en outre une information d'application concernant au moins une application (APP) implémentée dans la station mobile ou une application (APP) à implémenter, dans laquelle le module de détermination (DIS) permet de déduire et de générer, sous forme de niveau de sécurité, un niveau de sécurité d'application (ASL) obtenu lorsque l'application (APP) fonctionne dans la station mobile en utilisant les ressources de sécurité (SR), en plus d'un niveau de sécurité (SL) généré indépendamment du fonctionnement de l'application (APP) dans la station mobile, et
- un module de commande d'application couplé au module de détermination (DIS) et configuré pour commander l'exécution de l'application (APP) dans un environnement fonctionnel dépendant du niveau de sécurité d'application (ASL) déduit de l'application (APP), dans laquelle l'application peut être exécutée dans un environnement fonctionnel étendu, dans un environnement fonctionnel complet, dans un environnement fonctionnel limité et peut être désactivée, et des fonctionnalités critiques en termes de sécurité étendant l'environnement fonctionnel de l'application (APP) sont ajoutées à l'environnement fonctionnel.

2. Station mobile selon la revendication 1, dans laquelle un ou plusieurs des modules de sécurité suivants sont prévus en tant que ressources de sécurité (SR) : un environnement d'exécution normal (REE) du terminal (ME), en particulier avec ou sans fonctions cryptographiques ; un module d'identité d'abonné virtuel implémenté dans le terminal (ME) ; un environnement d'exécution sécurisé (TEE) du terminal (ME) ; un module d'identité d'abonné pouvant fonctionner dans le terminal (ME), en particulier un module d'identité d'abonné (SIM) extractible, un module d'identité d'abonné intégré (eSE), un module d'identité d'abonné certifié extractible, un module d'identité d'abonné certifié intégré ; une carte mémoire de microprocesseur sécurisée, en particulier une carte Secure SD et/ou une carte Secure Micro SD.

3. Station mobile selon la revendication 2, dans laquelle un niveau de sécurité (SL) est déduit et généré pour chaque module de sécurité et/ou pour chaque combinaison d'un ou plusieurs modules de sécurité de la station mobile.

4. Station mobile selon l'une des revendications 1 à 3, dans laquelle le module de détermination (DIS) est intégré dans une interface de programmation (API) qui est configurée pour :
- générer, à partir de la station mobile, une information de sortie concernant le niveau de sécurité (SL) de la station mobile et/ou
- entrer, dans la station mobile, une information de commande pour commander le niveau de sécurité.

5. Station mobile selon la revendication 4, dans laquelle un ou plusieurs des éléments suivants peuvent être ou sont délivrés en tant qu'information de sortie : un niveau de sécurité (SL) de la station mobile ; une ressource de sécurité (SR) disponible de la station mobile ; un niveau de sécurité (SL) d'une ressource de sécurité (SR) ; tous les niveaux de sécurité (SL) de toutes les ressources de sécurité (SR) de la station mobile ; toutes les ressources de sécurité (SR) disponibles de la station mobile ; le plus haut niveau de sécurité (SL) disponible de la station mobile ; un niveau de sécurité (SL) actuellement fixé de la station mobile ; une information de fonctionnalité pour un ou chaque niveau de sécurité (SL) ou des fonctionnalités disponibles pour une ou chaque ressource de sécurité (SR).

6. Station mobile selon la revendication 4 ou 5, dans laquelle l'information de commande contient un ou plusieurs des éléments suivants : spécifier l'utilisation d'une ressource de sécurité (SR) déterminée avec un niveau de sécurité (SL) déterminé ; spécifier l'utilisation de chaque ressource de sécurité (SR) ayant le plus haut niveau de sécurité (SL).

7. Station mobile selon l'une des revendications 1 à 6, dans laquelle le module de détermination (DIS) est implémenté dans celle ressource de sécurité (SR) de la station mobile qui donne à la station mobile le plus haut niveau de sécurité (SL).

8. Station mobile selon l'une des revendications 1 à 6, dans laquelle le module de détermination (DIS) est implémenté dans une ressource de sécurité (SR) de la station mobile intégrée dans le terminal (ME).

9. Système de chargement d'application comportant une station mobile selon l'une des revendications 1 à 8 et comportant un serveur d'applications (SER),
dans lequel le serveur d'applications (SER) est **caractérisé par** un module de sélection d'application (SEL) couplé au module de détermination (DIS) et configuré pour sélectionner, en fonction du niveau de sécurité d'application (ASL) déduit pour une application (APP), une variante d'application avec un environnement fonctionnel correspondant au niveau de sécurité d'application (ASL) et fournir la variante d'application sélectionnée pour un téléchargement vers la station mobile.

10. Système de chargement d'application selon la revendication 9, dans lequel la variante d'application fournie comporte : l'application (APP) avec l'environnement fonctionnel correspondant au niveau de sécurité d'application (ASL) et/ou des fonctionnalités déterminées pour compléter l'application (APP), en particulier des fonctionnalités supplémentaires.

11. Système d'évaluation du risque comportant une ou plusieurs stations mobiles selon l'une des revendications 1 à 8 et un serveur de risques,
dans lequel au moins une application (APP) est contenue dans au moins une station mobile,
dans lequel le serveur de risques est **caractérisé par**
un module d'évaluation du risque couplé au module de détermination (DIS) et configuré pour déduire, en fonction du niveau de sécurité d'application (ASL) de l'application ou des applications (APP) contenues dans la station mobile ou dans les stations mobiles, un risque émanant de la station mobile ou de la pluralité de stations mobiles.
